# EUROPÄISCHE PATENTANMELDUNG

(11) **EP 4 631 821 A1**
(43) Veröffentlichungstag der Anmeldung: **15.10.2025**
(21) Anmeldenummer: 25167376.0
(22) Anmeldetag: 31.03.2025
(51) Int. Cl.: B61J 3/12, E02F 9/02, B60F 1/04

(54) **ZWEIWEGEFAHRZEUG**

(30) Priorität: 09.04.2024 DE 102024109858
(71) Anmelder: Liebherr-Hydraulikbagger GmbH, 88457 Kirchdorf/Iller (DE)
(72) Erfinder: SCHICK, Marcel, 87700 Memmingen (DE); MÜLLER, Michael, 89165 Dietenheim (DE); GRABMAIER, Stefan, 86842 Türkheim (DE)
(74) Vertreter: Laufhütte, Dieter

(57) **Zusammenfassung**

Die Erfindung betrifft ein Zweiwegefahrzeug, insbesondere einen Zweiwegebagger, mit einem Unterwagen, welcher ein erstes Fahrwerk für die bodengebundene Fortbewegung des Zweiwegefahrzeugs sowie ein Schienenfahrwerk mit einer vorderen und einer hinteren Schienenachse für die Schienenfahrt umfasst, wobei der Unterwagen ein Mittelstück umfasst, an welchem das erste Fahrwerk angeordnet ist. Das Schienenfahrwerk umfasst Aktuatoren, mittels welchen die Schienenachsen relativ zum Mittelstück zwischen einer ersten Fahrstellung für die Straßenfahrt und wenigstens einer zweiten Fahrstellung für die Schienenfahrt bewegbar sind. Erfindungsgemäß ist die vordere und/oder die hintere Schienenachse um eine Pendelachse drehbar gegenüber dem Mittelstück gelagert und mit dem Mittelstück zusätzlich über wenigstens eine Lageranordnung gekoppelt, welche zwischen einem Dämpfungsmodus mit vergleichsweise niedriger Steifigkeit und einem Sperrmodus mit vergleichsweise höherer Steifigkeit umschaltbar ist. Die Lageranordnung umfasst zwei getrennte Baugruppen, von denen eine erste Baugruppe die höhere Steifigkeit und eine zweite Baugruppe die niedrigere Steifigkeit bereitstellt, wobei die zweite Baugruppe zum Umschalten in den Sperrmodus deaktivierbar ist. Die Erfindung betrifft ferner eine Lageranordnung für ein erfindungsgemäßes Zweiwegefahrzeug.

## Beschreibung

Die vorliegende Erfindung betrifft ein Zweiwegefahrzeug, insbesondere einen Zweiwegebagger, gemäß dem Oberbegriff des Anspruchs 1 sowie eine Lageranordnung für ein solches.

Zweiwegefahrzeuge sind aus dem Stand der Technik bekannt und zeichnen sich dadurch aus, dass sie multifunktional einsetzbar sind. Einerseits besitzen derartige Fahrzeuge ein erstes Fahrwerk für die bodengebundene Fortbewegung, sodass sie flexibel und unabhängig zum und am Einsatzort verfahren werden können, beispielsweise ein Raupenfahrwerk mit zwei Raupenträgern oder ein Radfahrwerk mit mehreren Radachsen. Andererseits weisen sie ein Schienenfahrwerk auf, das über Aktuatoren in eine Betriebsstellung gebracht und für die Schienenfahrt eingesetzt werden kann. Dadurch können Zweiwegefahrzeuge wie gewöhnliche Schienenfahrzeuge auf Gleisen verfahren, wobei der Antrieb während der Schienenfahrt üblicherweise über eine oder mehrere angetriebene Radachsen des Radfahrwerks oder über das Schienenfahrwerk erfolgt.

Derartige Zweiwegefahrzeuge können für unterschiedliche Arbeitsfunktionen konzipiert sein, beispielsweise als Schienenreinigungsfahrzeuge, Hebezeuge bzw. Krane, Greifer bzw. Materialumschlaggeräte, Hebebühnen, Dumper oder Bagger. Das Schienenfahrwerk kann dabei entweder als Anbaukonstruktion an ein bestehendes, straßentaugliches oder über Raupenträger verfahrbares Fahrzeug montierbar oder in den Grundstahlbau des Unterwagens integriert sein.

Aus der DE 20 2006 017 727 U1 ist ein Zweiwegebagger bekannt, welcher einen gewöhnlichen Unterwagen mit Radfahrwerk besitzt, an dessen Stirnseiten (in Fahrtrichtung gesehen) Anbauten montiert sind, die mittels Hydraulikzylindern um horizontale Schwenkachsen schwenkbare Schienenachsen tragen. Durch Absenken bzw. Runterschwenken der Schienenachsen mittels der Hydraulikzylinder wird die Betriebsstellung für die Schienenfahrt hergestellt, bei der der Zweiwegebagger über das Radfahrwerk angetrieben und über das Schienenfahrwerk auf den Schienen geführt wird. Durch Anheben bzw. Hochschwenken der Schienenachsen mittels der Hydraulikzylinder wird die Betriebsstellung für die Straßenfahrt hergestellt.

Sind die Schienenachsen, so wie bei dem in der DE 20 2006 017 727 U1 offenbarten Gerät, fest, d.h. ohne Möglichkeit einer Pendelbewegung um eine zur Fahrtrichtung parallele Längsachse an die Grundstahlbaustruktur des Fahrzeugs angebunden, können eventuelle Höhenunterschiede der Schienen aufgrund von Schienenunebenheiten und/oder -verwindungen (nachfolgend nur noch als Schienenunebenheiten bezeichnet) nicht ausreichend ausgeglichen werden. Dies kann dazu führen, dass ein Schienenrad beim Überfahren einer solchen Schienenunebenheit von der Schiene abhebt, was zu einer unsicheren Führung und im schlimmsten Fall zu einem Entgleisen des Zweiwegefahrzeugs führen kann.

Um ein solches Abheben der Schienenräder zu vermeiden kann es mindestens einer Schienenachse konstruktiv ermöglicht werden, beim Überfahren von Schienenunebenheiten um eine quer zur Schienenachse verlaufende Drehachse bzw. Pendelachse zu pendeln. Um eine ausreichende Stabilität des Fahrwerks zu gewährleisten, können Federungs- oder Dämpfungselemente vorgesehen sein, die Pendelbewegungen der Schienenachse hemmen. Dadurch kann jedoch unter Umständen für einen auf den Schienen erfolgenden Arbeitsbetrieb des Zweiwegefahrzeugs keine ausreichend stabile Stützbasis erreicht werden, was die maximal zulässige Traglast verringert.

Der vorliegenden Erfindung liegt daher die Aufgabe zugrunde, ein gattungsgemäßes Zweiwegefahrzeug bereitzustellen, welches einerseits eine Schienenfahrt mit guter Fahrdynamik zum Ausgleichen von Schienenunebenheiten und andererseits einen stabilen schienengebundenen Arbeitsbetrieb ermöglicht.

Erfindungsgemäß wird diese Aufgabe durch die Kombination der Merkmale des Anspruchs 1 gelöst. Vorteilhafte Ausführungsformen der Erfindung ergeben sich aus den Unteransprüchen und der nachfolgenden Beschreibung.

Demnach wird ein Zweiwegefahrzeug vorgeschlagen, bei welchem es sich insbesondere um einen Zweiwegebagger handeln kann. Das Zweiwegefahrzeug besitzt einen Unterwagen, welcher einerseits ein erstes Fahrwerk für die bodengebundene Fortbewegung (z.B. auf der Straße oder im Gelände) des Zweiwegefahrzeugs besitzt. Dabei kann es sich um ein Radfahrwerk mit mindestens zwei Radachsen für die Straßenfahrt oder um ein Raupenfahrwerk mit zwei Raupenträgern (z.B. bei einer Ausbildung des Zweiwegefahrzeugs als Raupen-Zweiwegebagger) handeln. Daneben umfasst der Unterwagen ein Schienenfahrwerk mit einer vorderen und einer hinteren Schienenachse für die Schienenfahrt, wobei die Schienenachsen für die Schienenfahrt ausgebildete Schienenräder besitzen. Der Unterwagen umfasst weiterhin ein Mittelstück, an welchem das erste Fahrwerk angeordnet ist. Das Mittelstück kann eine Stahlbaukonstruktion darstellen.

Bei einer Ausbildung des ersten Fahrwerks als Radfahrwerk ist mindestens eine der Radachsen lenkbar, um das Zweiwegefahrzeug bei der Straßenfahrt (= erste Fahrstellung) lenken zu können. Ferner ist mindestens eine der Radachsen aktiv antreibbar, sodass das Zweiwegefahrzeug bei der Straßenfahrt über das Radfahrwerk angetrieben und gelenkt werden kann. Bei einer Ausbildung des ersten Fahrwerks als Raupenfahrwerk erfolgt die Lenkung und der Antrieb bei einem Verfahren auf dem Boden (= erste Fahrstellung) in bekannter Weise über die Raupenträger.

Das Zweiwegefahrzeug besitzt mindestens eine zweite Fahrstellung für die Schienenfahrt, in der die Schienenachsen so weit abgesenkt sind, dass die Schienenräder die Schienen auf den Schienen aufsitzen. Bei einer Ausführungsform des Zweiwegefahrzeugs mit Raupenfahrwerk sind die Raupenträger in der zweiten Fahrstellung insbesondere von den Schienen abgehoben, sodass das Zweiwegefahrzeug nur über die Schienenräder auf den Schienen aufsitzt und angetrieben wird.

Bei einer Ausführungsform des Zweiwegefahrzeugs mit Radfahrwerk berühren in der zweiten Fahrstellung bevorzugt sowohl die Schienenräder als auch die Räder der Radachsen die Schienen, sodass das Zweiwegefahrzeug über die Schienenräder auf den Schienen geführt und über die Radachsen angetrieben wird. Alternativ kann in der zweiten Fahrstellung das Zweiwegefahrzeug nur über die Schienenachsen bzw. Schienenräder auf den Schienen aufsitzen, während die Räder der Radachsen von den Schienen abgehoben sind, wobei das Zweiwegefahrzeug über wenigstens eine der Schienenachsen angetrieben wird. Besonders bevorzugt ist es, wenn das Zweiwegefahrzeug mit Radfahrwerk drei unterschiedliche Fahrstellungen besitzt: eine erste Fahrstellung für die Straßenfahrt, eine zweite Fahrstellung für die Schienenfahrt, in der das Zweiwegefahrzeug über die Schienenräder auf den Schienen geführt und über die Radachsen angetrieben wird, und eine dritte Fahrstellung, in der das Zweiwegefahrzeug nur über die Schienenräder auf den Schienen aufsitzt.

Das Zweiwegefahrzeug umfasst ferner Aktuatoren, mittels welchen die Schienenachsen relativ zum Mittelstück und somit relativ zum ersten Fahrwerk zwischen den genannten Fahrstellungen bewegt, insbesondere verschwenkt werden können.

Erfindungsgemäß ist die vordere und/oder die hintere Schienenachse um eine Pendelachse drehbar gegenüber dem Mittelstück gelagert, um bei der Schienenfahrt Schienenunebenheiten durch eine Pendelbewegung der Schienenachse(n) um die genannte Pendelachse auszugleichen. Durch die drehbare Lagerung der Schienenachse(n) am Mittelstück wird sichergestellt, dass Schienenunebenheiten effektiv ausgeglichen werden können und alle Schienenräder unabhängig von der Gleisbeschaffenheit stets Schienenkontakt haben. Die Pendelachse verläuft vorzugsweise parallel zu einer Längsachse des Unterwagens, wobei die Längsachse vorliegend so definiert ist, dass sie bei einer Geradeausfahrt des Zweiwegefahrzeugs auf horizontal verlaufenden Schienen parallel zur Fahrtrichtung, d.h. ebenfalls horizontal verläuft. Aufgrund der Ausrichtung der Pendelachse parallel zur Längsachse ergeben sich ferner bei einem Ausgleichen von Schienenunebenheiten keine oder nur geringe ungewollte parasitäre Bewegungen der Schienenachse(n) um die Hochachse.

Die Pendelachse ist eine definierte Drehachse und wird insbesondere über wenigstens ein Drehlager bereitgestellt und nicht etwa über eine bewegliche Lagerung der Schienenachse durch entsprechende Ausgestaltung der Lagerstellen (in diesem Fall wäre die Drehachse nicht "definiert").

Erfindungsgemäß ist die mindestens eine um die Pendelachse drehbare Schienenachse zusätzlich über wenigstens eine Lageranordnung mit dem Mittelstück gekoppelt, welche für eine Federung und/oder Dämpfung der pendelnden Schienenachse(n) und für eine ausreichende Stabilität und Fahrdynamik des Schienenfahrwerks sorgt.

Die mindestens eine Lageranordnung ist erfindungsgemäß zwischen einem Dämpfungsmodus mit vergleichsweise niedriger Steifigkeit und einem Sperrmodus mit vergleichsweise höherer Steifigkeit umschaltbar. Mit anderen Worten ist die Steifigkeit, d.h. der Widerstand, den die Lageranordnung einer um die Pendelachse erfolgenden Drehung zwischen Schienenachse und Mittelstück entgegensetzt, im Sperrmodus größer als im Dämpfungsmodus. Der Dämpfungsmodus kommt insbesondere bei der Schienenfahrt zum Einsatz, bei der ein möglichst effektiver Ausgleich von Schienenunebenheiten und eine optimale Fahrdynamik im Vordergrund stehen. Der Sperrmodus kommt dagegen insbesondere in einem schienengebundenen Arbeitsbetrieb des Zweiwegefahrzeugs zum Einsatz, bei dem eine möglichst steife Fahrwerksabstimmung zum Erreichen einer ausreichenden Stabilität erforderlich ist. Daher sollten Pendelbewegungen der Schienenachse(n) im Arbeitsbetrieb vermieden werden, sodass die maximale Traglast erhöht und die Kippgefahr reduziert werden kann.

Erfindungsgemäß umfasst die Lageranordnung zwei separate Baugruppen: eine erste Baugruppe stellt die höhere Steifigkeit für den Sperrmodus bereit, während eine zweite Baugruppe die niedrigere Steifigkeit für den Dämpfungsmodus erzeugt. Damit die Lageranordnung vom Dämpfungsmodus in den Sperrmodus umgeschaltet werden kann (z.B. nach erfolgter Schienenfahrt zum Einsatzort und vor Aufnahme des Arbeitsbetriebs), kann die zweite Baugruppe deaktiviert werden, sodass im Sperrmodus nur noch die höhere Steifigkeit der ersten Baugruppe aktiv ist. Das Umschalten erfolgt vorzugsweise automatisch durch eine Steuerung des Zweiwegefahrzeugs. Mit dem Deaktivieren der zweiten Baugruppe ist hierbei insbesondere gemeint, dass der durch die zweite Baugruppe bereitgestellte zusätzliche Weg gesperrt wird, sodass eine Stauchung der Lageranordnung nur noch über die erste Baugruppe erfolgt.

Die Baugruppen der Lageranordnung zeichnen sich insbesondere dadurch aus, dass sie unabhängig voneinander ein- und ausgebaut werden können und keine ineinandergreifenden Teile besitzen, welche einen gemeinsamen Austausch oder Einbau beider Baugruppen erfordern.

Dadurch, dass die Funktionseinheiten der Lageranordnung, welche die unterschiedlichen Steifigkeiten bereitstellen, in getrennten Baugruppen untergebracht sind, besitzt die Lageranordnung einen einfachen Aufbau, welcher zudem einfach zu reparieren bzw. zu warten ist. Ist beispielsweise eine der Baugruppen defekt, kann diese vorzugsweise unabhängig von der anderen Baugruppe ausgetauscht werden. Dies ist vorteilhaft gegenüber einer Lösung, bei der eine gemeinsame Baugruppe die unterschiedlichen Steifigkeiten bereitstellt. Die Unterbringung in separate Baugruppen schließt nicht aus, dass beide Baugruppen in einem gemeinsamen Gehäuse angeordnet sind, welches vorzugsweise geöffnet oder entfernt werden kann, um einen Zugriff auf die einzelnen Baugruppen zu ermöglichen.

In einer möglichen Ausführungsform ist vorgesehen, dass die erste Baugruppe ein elastisches Lagerelement umfasst. Es kann vorgesehen sein, dass das elastische Lagerelement eine wegabhängige Gegenkraft erzeugt. Das elastische Lagerelement kann mehrere "in Reihe geschaltete" elastische Einzelelemente umfassen.

Vorzugsweise handelt es sich bei dem elastischen Lagerelement nicht um eine Spiralfeder oder eine Tellerfeder, sondern um ein Elastomerelement, beispielsweise eine Schichtfeder. Die Kennlinie des Elastomerelements (z.B. die Schichtfederkennlinie) bestimmt dabei die Fahrwerkabstimmung im Sperrbetrieb. Das Elastomerelement kann mehrere "in Reihe geschaltete" Elastomerelemente umfassen.

Optional kann die erste Baugruppe ein magnetorheologisches Elastomerelement (MRE) umfassen, dessen Elastomerkennlinie durch Anlegen eines äußeren Magnetfeldes schnell und reversibel verändert und dadurch beispielsweise an die Anforderungen des jeweiligen Arbeitseinsatzes oder an eine zu hebende Last angepasst werden kann.

In einer weiteren möglichen Ausführungsform ist vorgesehen, dass die erste Baugruppe einen ersten mechanischen Anschlag umfasst, der eine Kompression bzw. Stauchung des elastischen Lagerelements um eine erste Strecke zulässt. Eine weitere Stauchung des elastischen Lagerelements über die erste Strecke hinaus wird durch den ersten mechanischen Anschlag blockiert. Dadurch wird das elastische Lagerelement vor Überlastung geschützt und eine besonders harte Fahrwerksabstimmung im Sperrbetrieb erreicht, was die Kippgefahr reduziert. Der erste mechanische Anschlag umfasst vorzugsweise mehrere Anschlagelemente, die sich bei einer Stauchung des elastischen Lagerelements aufeinander zubewegen und nach Überwinden der ersten Strecke aneinanderstoßen.

In einer weiteren möglichen Ausführungsform ist vorgesehen, dass die zweite Baugruppe ein durch die erste Baugruppe kontaktierbares, verschiebbar gelagertes Kontaktelement umfasst, welches einen zweiten mechanischen Anschlag aufweist, der eine Verschiebung des Kontaktelements um eine zweite Strecke zulässt. Bei einer Stauchung der Lageranordnung werden die ersten und zweiten Baugruppen gegeneinandergedrückt, wobei der Kontakt am Kontaktelement der zweiten Baugruppe erfolgt. Das Kontaktelement ist maximal um die zweite Strecke verschiebbar gelagert, sodass nach Zurücklegen der zweiten Strecke das Kontaktelement als fester Anschlag fungiert und nun eine Beanspruchung der ersten Baugruppe (insbesondere eine Stauchung des zuvor genannten elastischen Lagerelements) erfolgt.

Die Steifigkeiten der Baugruppen sind insbesondere so abgestimmt, dass bei einer Verschiebung des Kontaktelements die Eigenschaften der Lageranordnung im Wesentlichen ausschließlich durch die Eigenschaften der zweiten Baugruppe (d.h. durch deren niedrigere Steifigkeit) bestimmt werden. Dadurch, dass das Kontaktelement verschiebbar gelagert ist, kann es vorzugsweise an einer bestimmten Position (d.h. noch vor Zurücklegen der zweiten Strecke) gezielt blockiert und damit die zweite Baugruppe deaktiviert werden. In dieser Position bildet das Kontaktelement dann einen festen mechanischen Anschlag für die erste Baugruppe, sodass letztere nun die Eigenschaften der Lageranordnung bestimmt.

In einer weiteren möglichen Ausführungsform ist vorgesehen, dass die zweite Baugruppe einen Hydraulikzylinder mit einem in einem Zylindergehäuse verschiebbar gelagerten Kolben umfasst, wobei der Kolben das Kontaktelement darstellt oder mit diesem verbunden ist. Die zweite Strecke wird dabei insbesondere von dem Zylindergehäuse definiert, innerhalb welchem sich der Kolben bewegen kann. Vorzugsweise umfasst die zweite Baugruppe ein Sperrventil, welches in einer Sperrstellung eine Druckkammer des Hydraulikzylinders hydraulisch absperrt, sodass sich der Kolben und somit das Kontaktelement nicht mehr bewegen kann. Die zweite Strecke kann der maximalen Ausdehnung der Druckkammer entsprechen und somit der maximalen Strecke, die der Kolben ausgehend von einem maximal ausgefahrenen Zustand des Kontaktelements im Zylindergehäuse zurücklegen kann, bis er anstößt.

Das Sperrventil ist insbesondere Teil eines Hydraulikkreises des Zweiwegefahrzeugs, über welchen die mindestens eine Lageranordnung betreibbar ist. Die Aktuatoren zum Bewegen der Schienenachsen in die jeweiligen Fahrstellungen können als hydraulische Schwenkzylinder ausgebildet und über denselben oder einen separaten Hydraulikkreis betätigbar sein.

In einer weiteren möglichen Ausführungsform ist vorgesehen, dass das Zweiwegefahrzeug eine Vorrichtung zum automatischen Ausrichten des Mittelstücks in einer insbesondere horizontalen Grundstellung umfasst. Diese Vorrichtung wirkt insbesondere derart mit der Lageranordnung zusammen, dass sich das Mittelstück langfristig immer selbstständig in der Grundstellung ausrichtet, auch wenn sich die Lageranordnungen im Sperrmodus befinden. Die Vorrichtung umfasst vorzugsweise ein Sperrventil (dabei kann es sich insbesondere um das zuvor beschriebene Sperrventil handeln), welches mit der Druckkammer des Hydraulikzylinders verbunden ist. Zum Ausrichten des Mittelstücks wird im Sperrmodus, wenn keine externe Last auf den Hydraulikzylinder und somit kein Druck in der Druckkammer wirkt, das Sperrventil kurzzeitig geöffnet. Das Öffnen erfolgt vorzugsweise durch einen in einer Hydraulikleitung zum Sperrventil anliegenden Nachspeisedruck. Durch das zeitweise Öffnen des Sperrventils kann Hydraulikfluid in die Druckkammer des Hydraulikzylinders nachfließen, wodurch der Kolben nachgesetzt wird. Durch dieses Nachspeisen kann das Mittelstück immer wieder in eine mittig bzw. eben ausgerichtete Stellung gebracht werden, auch wenn der Sperrmodus einmalig bei verwundenem Gleis eingenommen wurde.

In einer weiteren möglichen Ausführungsform ist vorgesehen, dass die Baugruppen der Lagerkomponente unabhängig voneinander austauschbar sind. Alternativ oder zusätzlich können die Baugruppen jeweils ein eigenes Gehäuse besitzen. Diese können optional wiederum in einem gemeinsamen Gehäuse angeordnet sein.

In einer weiteren möglichen Ausführungsform ist vorgesehen, dass das Schienenfahrwerk wenigstens ein Endstück umfasst, welches eine der Schienenachsen trägt und um die zuvor beschriebene Pendelachse drehbar am Mittelstück gelagert ist, um Unebenheiten bei der Schienenfahrt durch eine Pendelbewegung der Schienenachse auszugleichen. Das Endstück ist über mindestens eine Lageranordnung, vorzugsweise über zwei Lageranordnungen, mit dem Mittelstück gekoppelt. Vorzugsweise ist jeweils eine Lageranordnung auf jeder Seite (d.h. in Fahrtrichtung rechts und links) der Pendelachse angeordnet.

In einer weiteren möglichen Ausführungsform ist vorgesehen, dass das Endstück ein erstes und ein zweites Rahmenteil umfasst, wobei die Schienenachse am ersten Rahmenteil gelagert ist und das zweite Rahmenteil um die Pendelachse drehbar mit dem Mittelstück verbunden ist. Das erste Rahmenteil kann zwei Lagerstellen zur Lagerung bzw. Befestigungsstellen zur Befestigung der Schienenachse umfassen. Die beiden Rahmenteile sind vorzugsweise beweglich und insbesondere in Bezug auf die jeweilige Pendelachse rotationsstarr miteinander verbunden. Mit anderen Worten kann das erste Rahmenteil relativ zum zweiten Rahmenteil vorzugsweise bewegt, insbesondere aber nicht um eine parallel zur Pendelachse bzw. zur Unterwagenlängsachse verlaufende Drehachse rotiert werden. Die Relativbewegung erfolgt über die genannten Aktuatoren, wobei durch die Bewegung des ersten Rahmenteils die Schienenachse in die entsprechende Fahrstellung bewegt werden kann.

Die ersten und zweiten Rahmenteile sind vorzugsweise schwenkbar miteinander verbunden, wobei die verschiedenen Fahrstellungen durch Verschwenken des ersten Rahmenteils relativ zum zweiten Rahmenteile erreicht werden. Die Schwenkachse verläuft insbesondere horizontal. Die Aktuatoren können als hydraulische Schwenkzylinder ausgebildet sein, welche zwischen den ersten und zweiten Rahmenteilen angeordnet und an diesen jeweils gelenkig gelagert sind.

Die mindestens eine Lageranordnung ist zwischen dem zweiten Rahmenteil und dem Mittelstück eingebaut. Vorzugsweise ist dabei die erste Baugruppe der Lageranordnung mit dem zweiten Rahmenteil und die zweite Baugruppe mit dem Mittelstück verbunden, wobei auch der umgekehrte Fall denkbar ist. Die Dämpfung bzw. Versteifung der Pendelbewegung, welche abhängig vom gewählten Modus durch die mindestens eine Lageranordnung bereitgestellt wird, erfolgt also zwischen Mittelstück und zweitem Rahmenteil.

In einer möglichen Ausführungsform ist vorgesehen, dass das Schienenfahrwerk ein vorderes und ein hinteres Endstück umfasst, welche jeweils an einer in Fahrtrichtung gesehen vorderen und hinteren Stirnseite des Mittelstücks angeordnet und drehbar mit dem Mittelstück verbunden sind. Die Endstücke bzw. die zweiten Rahmenteile können als Anbauteile ausgebildet sein, die über entsprechende Verbindungsmittel (z.B. Bolzen- und/oder Schraubenverbindungen) am Mittelstück montierbar sind.

Die vordere Schienenachse und die hintere Schienenachse sind vorzugsweise über die Drehlager der jeweiligen Endstücke unabhängig voneinander um jeweils eine Pendelachse drehbar gegenüber dem Mittelstück gelagert. Die Pendelachsen der Endstücke verlaufen parallel und vorzugsweise unabhängig von der Fahrstellung koaxial zueinander. Dadurch, dass nicht nur eine, sondern beide Schienenachsen drehbar mit dem Mittelstück verbunden sind, ergibt sich eine verbesserte Ausgleichsmöglichkeit bei Schienenunebenheiten, da beide Schienenachsen unabhängig voneinander Pendelbewegungen ausführen können. Ein weiterer Vorteil ist ein gleichbleibendes Fahrwerksverhalten beim Arbeiten über die vordere oder die hintere Schienenachse. Darüber hinaus werden höhere zulässige Traglasten erreicht, da die Schienenräder bei einer Schwerpunktsverlagerung erst später von den Schienen abheben.

In einer weiteren möglichen Ausführungsform ist vorgesehen, dass die Endstücke jeweils über mindestens eine Lageranordnung, vorzugsweise jeweils über zwei Lageranordnungen, mit dem Mittelstück gekoppelt sind. Somit können sowohl die vordere als auch die hintere Schwenkachse über die Lageranordnungen mit unterschiedlichen Steifigkeiten gedämpft bzw. gelagert werden. Die Lageranordnungen bilden vorzugsweise eine zu einer Mittelebene des Unterwagens symmetrische Anordnung. In Draufsicht können sie die Ecken eines Rechtecks bilden.

In einer alternativ möglichen Ausführungsform ist vorgesehen, dass nur eines der Endstücke über mindestens eine Lageranordnung, vorzugsweise über zwei Lageranordnungen, mit dem Mittelstück gekoppelt ist, während das andere Endstück über mindestens eine zur Lageranordnung unterschiedlich ausgebildete Lagervorrichtung, vorzugsweise über zwei Lagervorrichtungen, mit dem Mittelstück gekoppelt ist.

Die Lagervorrichtung unterscheidet sich insbesondere dadurch von der Lageranordnung, dass sie nur eine einzige Steifigkeit bereitstellt, welche beispielsweise der höheren Steifigkeit der Lageranordnung entsprechen und die nötige Stabilität für den Arbeitsbetrieb bereitstellen kann. Die Lagervorrichtung kann ein elastisches Lagerelement umfassen, wie zuvor beschrieben. Anstelle eines verschiebbaren Kontaktelements kann die Lagervorrichtung einen starren Anschlag aufweisen. Der gefederte bzw. gedämpfte Ausgleich von Schienenunebenheiten kann in diesem Fall primär von der anderen, über die mindestens eine Lageranordnung gefederten bzw. gedämpften Schienenachse übernommen werden. Gegenüber einer Ausführungsform, bei der beide Schienenachsen über Lageranordnungen mit umschaltbaren Steifigkeiten gelagert ist, ergibt sich eine vereinfachte Ausführung.

In einer weiteren möglichen Ausführungsform ist vorgesehen, dass das mindestens eine Endstück über ein erstes Drehlager und ein entlang der Pendelachse vom ersten Drehlager beabstandetes zweites Drehlager am Mittelstück gelagert ist. Durch die doppelte Lagerung des Endstücks über zwei axial voneinander beabstandete Drehlager können nicht nur Vertikal- und Horizontalkräfte, sondern auch Momente effektiv über die Drehlageranordnung übertragen werden. Insbesondere kann das zweite Drehlager, welches weiter von der Schienenachse entfernt ist als das erste Drehlager, als Momentenstütze dienen, die primär Dreh- bzw. Kippmomente zwischen Endstück und Mittelstück überträgt. Das erste Drehlager kann primär der Übertragung von Vertikal- und Horizontalkräften zwischen Endstück und Mittelstück dienen. Das zweite Drehlager kann als Loslager ausgebildet sein.

Vorzugsweise ist das erste Fahrwerk als Radfahrwerk mit mindestens zwei Radachsen für die Straßenfahrt ausgebildet, wobei wenigstens eine Radachse um eine koaxial zur Pendelachse verlaufende Radfahrwerkpendelachse schwenkbar gelagert ist. Derartige Radfahrwerkpendelachsen für eine oder mehrere Radachsen sind an sich beispielsweise von Hydraulikbaggern bekannt. Das zweite Drehlager kann nun auf einem die Radfahrwerkpendelachse definierenden Pendelbolzen oder auf einem separaten, koaxial dazu gelagerten Bolzen gelagert sein. Dabei fallen die Pendelachse und die Radfahrwerkpendelachse zusammen, d.h. die Drehlagerung erlaubt eine Pendelbewegung der Schienenachse um die Radfahrwerkpendelachse des Zweiwegefahrzeugs. Die Verwendung der Radfahrwerkpendelachse zur Drehlagerung des Endstücks und Momentenübertragung ergibt einen besonders einfachen und kompakten Aufbau des Unterwagens.

In einer weiteren möglichen Ausführungsform ist vorgesehen, dass das erste Fahrwerk als Radfahrwerk ausgebildet ist, wobei die Schienenachsen relativ zum Mittelstück zwischen einer ersten Fahrstellung für die Straßenfahrt, einer zweiten Fahrstellung, in der das Zweiwegefahrzeug über die Schienenachsen auf Schienen geführt und über die Radachsen antreibbar ist, und einer dritten Fahrstellung, in der das Zweiwegefahrzeug nur über die Schienenachsen auf Schienen aufsitzt und antreibbar ist, bewegbar, insbesondere verschwenkbar sind.

In einer weiteren möglichen Ausführungsform ist vorgesehen, dass zumindest eine der Schienenachsen einen Schienenachsenantriebsmechanismus umfasst, über welchen die Schienenachse und somit das Zweiwegefahrzeug in der genannten dritten Fahrstellung antreibbar ist. Der Schienenachsenantriebsmechanismus kann zusammen mit der Schienenachse um die zugehörige Pendelachse relativ zum Mittelstück drehbar und über die Aktuatoren relativ zum Mittelstück in die verschiedenen Fahrstellungen bewegbar sein.

In einer weiteren möglichen Ausführungsform ist vorgesehen, dass das Zweiwegefahrzeug einen drehbar auf dem Unterwagen gelagerten Oberwagen umfasst, welches beispielsweise einen Ausleger eines Kranaufbaus, einen Baggerausleger eines Baggeraufbaus, eine Hebebühne oder einen beliebigen anderen Aufbau zum Ausführen einer oder mehrerer Arbeitsfunktionen umfassen kann. Bevorzugt handelt es sich bei dem Zweiwegefahrzeug um einen Zweiwegebagger.

Der Unterwagen und der Oberwagen sind vorzugsweise so ausgebildet, dass in wenigstens einer definierten Oberwagenstellung, vorzugsweise in zwei definierten Oberwagenstellungen, der Gesamtschwerpunkt von Oberwagen und Mittelstück (d.h. insbesondere der Gesamtschwerpunkt des Zweiwegefahrzeugs ohne Berücksichtigung des Schienenfahrwerks bzw. der Endstücke) innerhalb der Mittelebene des Unterwagens und somit in einer Ebene mit den Pendelachsen der Schienenachsen liegt. Hierdurch liegt kein Drehmoment um die Pendelachse vor, was zu einer Verringerung der Drehmomentbelastung auf die Verbindungselemente und Lagerstellen führt.

Die Aktuatoren zum Bewegen der Schienenachsen in die jeweiligen Fahrstellungen sind vorzugsweise als hydraulische Schwenkzylinder ausgebildet, wobei das Zweiwegefahrzeug einen Hydraulikkreis zum Betätigen der Schwenkzylinder umfasst. Das Zweiwegefahrzeug umfasst vorzugsweise eine Steuerung, um die Schwenkzylinder zu steuern und die Schienenachsen automatisch in die jeweilige Fahrstellung zu bewegen. Die Steuerung kann vorzugsweise eine Hydraulikpumpe und/oder ein Steuerventil des Hydraulikkreises ansteuern, um die Schwenkzylinder zu betätigen.

Die Erfindung betrifft ferner eine Lageranordnung für ein erfindungsgemäßes Zweiwegefahrzeug. Dabei ergeben sich dieselben Eigenschaften, Vorteile und möglichen Ausführungsformen wie bereits in Bezug auf das erfindungsgemäße Zweiwegefahrzeug beschrieben, sodass auf eine wiederholende Beschreibung an dieser Stelle verzichtet wird.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische perspektivische Darstellung des Unterwagens eines Ausführungsbeispiels des erfindungsgemäßen Zweiwegefahrzeugs;
- Figuren 2a-b:: schematische seitliche Schnittansichten eines Ausführungsbeispiels der Lageranordnung in unterschiedlichen Belastungszuständen im Dämpfungsmodus;
- Figuren 3a-b:: schematische seitliche Schnittansichten eines Ausführungsbeispiels der Lageranordnung in unterschiedlichen Belastungszuständen im Sperrmodus;
- Figuren 4-5:: Beispiele für Steifigkeitskennlinien der ersten und zweiten Baugruppen;
- Figur 6:: eine seitliche Ansicht eines Ausführungsbeispiels der Lageranordnung;
- Figur 7:: eine Explosionsdarstellung eines Ausführungsbeispiels der ersten Baugruppe;
- Figur 8:: eine perspektivische Ansicht eines Ausführungsbeispiels des Unterwagens mit Blick auf eines der Endstücke;
- Figur 9:: eine vergrößerte Ansicht einer Lageranordnung in der Einbauposition am Unterwagen gemäß dem Ausführungsbeispiel der Figur 8;
- Figuren 10a-b:: schematische Seitenansichten des Unterwagens eines Ausführungsbeispiels des erfindungsgemäßen Zweiwegefahrzeugs in den zweiten und dritten Fahrstellungen;
- Figur 11:: eine schematische seitliche Schnittansicht eines Ausführungsbeispiels der Lagervorrichtung; und
- Figur 12:: eine Seitenansicht der Lagervorrichtung.

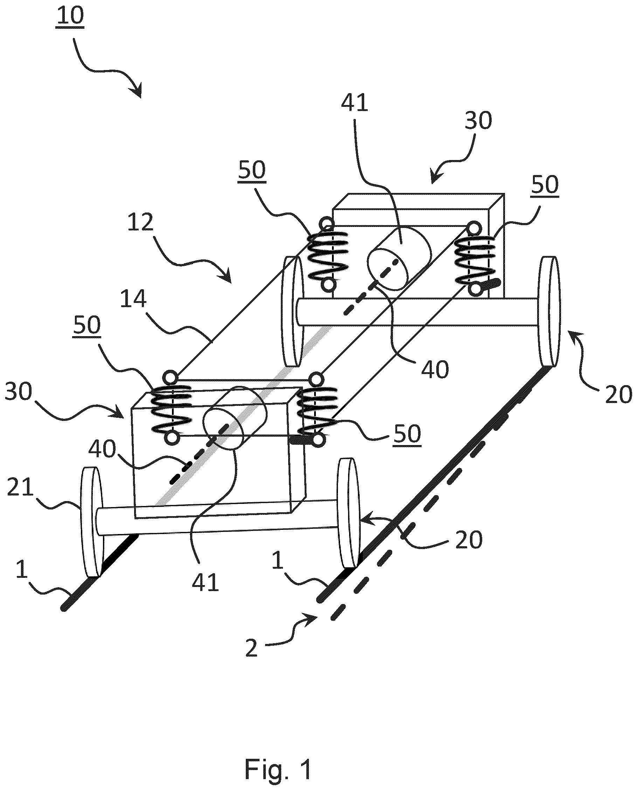

Die Figur 1 zeigt den Unterwagen 12 eines Ausführungsbeispiels des erfindungsgemäßen Zweiwegefahrzeugs 10, wobei der Aufbau des Unterwagens 12 nur grob schematisch dargestellt ist. Dabei kann es sich um den Unterwagen 12 eines Zweiwegebaggers handeln. Der Unterwagen 12 umfasst ein Mittelstück 14, welches ein hier nicht dargestelltes Radfahrwerk mit mindestens zwei Radachsen trägt. An den in Fahrtrichtung gesehen vorderen und hinteren Stirnseiten des Mittelstücks 14 befinden sich zwei Endstücke 30, welche jeweils eine Schienenachse 20 tragen. Die beiden Endstücke 30 mit den Schienenachsen 20 bilden ein Schienenfahrwerk des Zweiwegefahrzeugs 10.

In der gezeigten Ansicht befindet sich das Zweiwegefahrzeug 10 auf Schienen 1, die als zwei durchgezogene Linien dargestellt sind. Dabei ist eine der Schienen 1 im Vergleich zu deren nominaler Lage (gezeigt als gestrichelte Linie) und somit im Vergleich zur anderen Schiene 1 erhöht. Aus dieser Verwindung 2 ergibt sich ein Höhenunterschied zwischen den beiden Schienen 1, der bei einer rotationsstarren Anbindung der Schienenachsen 20 an das Mittelstück 14 dazu führen würde, dass eines der Schienenräder 21 von der Schiene 1 abhebt.

Um derartige Schienenverwindungen und -unebenheiten ausgleichen zu können, sind die Endstücke 30 über Drehlager 41 drehbar mit dem Mittelstück 14 verbunden. Die Drehlager 41 sind so angeordnet, dass die durch sie definierten Drehachsen 40 koaxial zueinander innerhalb der Mittelebene des Unterwagens 12 liegen. Die Drehachsen 40 bilden Momentandrehpole, um die die vorderen und hinteren Schienenachsen 20 unabhängig voneinander pendeln können, sodass auch beim Vorliegen eines Höhenunterschieds zwischen den beiden Schienen 1 alle Schienenräder 21 auf den Schienen 1 aufliegen. Diese Drehachsen 40 bilden daher Pendelachsen 40 für die Schienenachsen 20.

Bei dem in der Figur 1 gezeigten Ausführungsbeispiel ist jedes der Endstücke 30 zusätzlich zu den Drehlagern 41 über jeweils zwei Lageranordnungen 50 mit dem Mittelstück 14 verbunden. Dabei sind die Drehlager 41 mittig zwischen zwei seitlichen Lageranordnungen 50 angeordnet. Die Lageranordnungen 50 dienen dazu, das Mittelstück 14 relativ zu den Endstücken 30 zu stabilisieren und zu federn bzw. zu dämpfen, wenn die Schienenachsen 20 beim Überfahren von Schienenunebenheiten Ausgleichsbewegungen um die jeweiligen Pendelachsen 40 ausführen. Im schienengebundenen Arbeitsbetrieb des Zweiwegefahrzeugs 10 dienen die Lageranordnungen 50 dagegen als Steifigkeitselemente, welche das Mittelstück 14 gegenüber den Endstücken 30 derart stabilisieren, dass das Zweiwegefahrzeug 10 über eine rechteckige Stützbasis sicher auf den Schienen 1 steht.

In der Figur 1 sind die Lageranordnungen 50 symbolisch als Federn dargestellt. Bei den Lageranordnungen 50 handelt es sich allerdings nicht bloß um einfache Federn, da diese nicht für eine ausreichende Stabilisierung im Arbeitsbetrieb sorgen würden. Stattdessen sind die Lageranordnungen 50 mehrteilig aufgebaut und können, je nach gewähltem Modus, unterschiedliche Steifigkeiten bereitstellen: in einem Dämpfungsmodus besitzen die Lageranordnungen 50 eine niedrigere Steifigkeit für einen effektiven Ausgleich von Schienenunebenheiten, während sie in einem Sperrmodus eine für den stabilen Arbeitsbetrieb benötigte höhere Steifigkeit aufweisen.

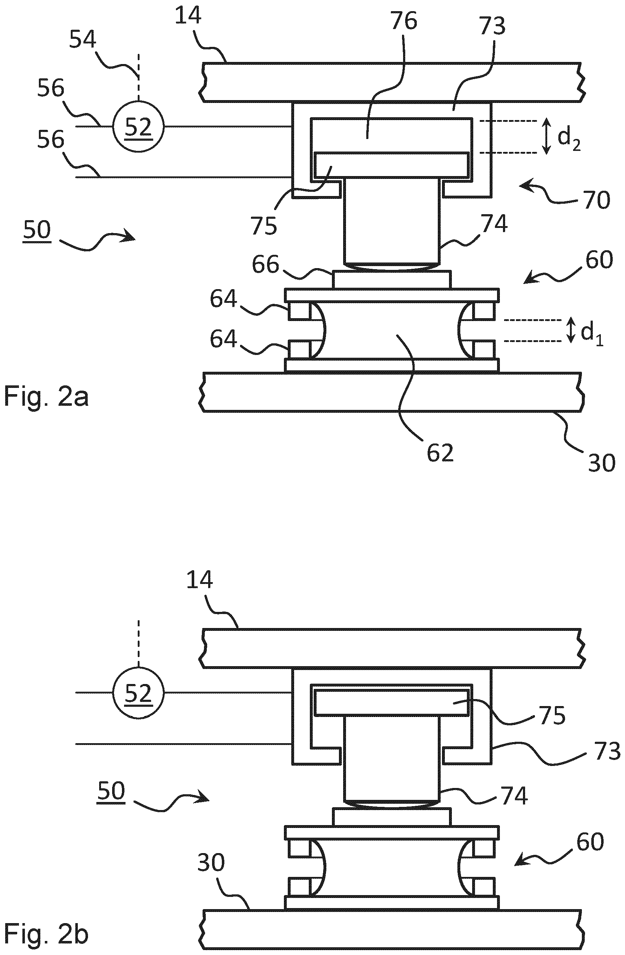

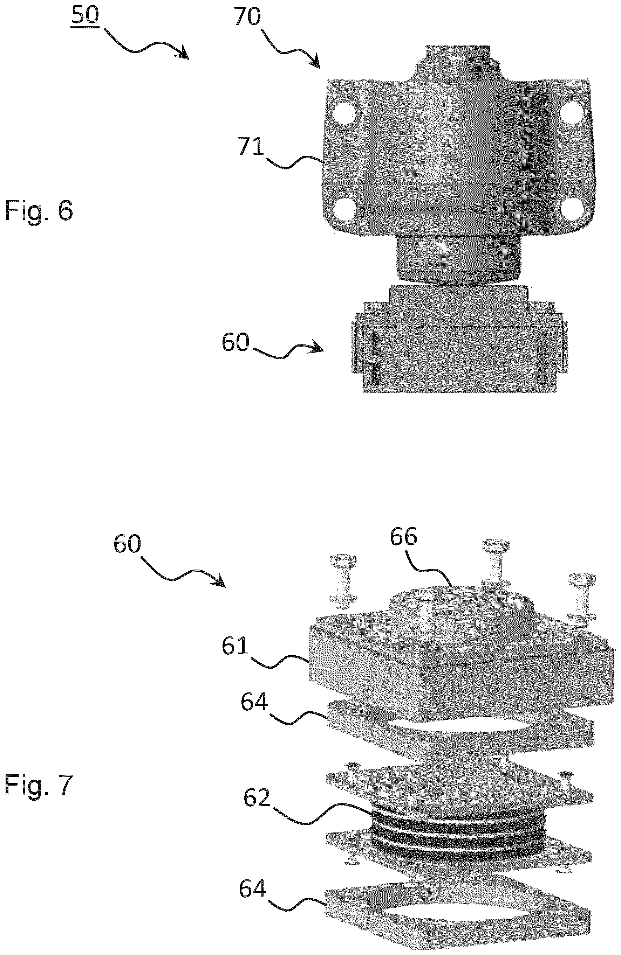

In den Figuren 2a-3b ist ein Ausführungsbeispiel einer Lageranordnung 50 in schematischen seitlichen Schnittansichten gezeigt. Wie in der Figur 2a zu erkennen ist, umfasst die Lageranordnung 50 eine erste Baugruppe 60, welche die höhere Steifigkeit für den Sperrmodus bereitstellt, und eine entlang der Längsachse der Lageranordnung 50 axial versetzte zweite Baugruppe 70, die durch einen Hydraulikzylinder gebildet wird und die niedrigere Steifigkeit für den Dämpfungsmodus bereitstellt. Beide Baugruppen 60, 70 stellen bevorzugt unabhängige, sich kontaktierende Einheiten dar, die in einem gemeinsamen Gehäuse oder, wie bei den Beispielen der Figuren 6-9, ohne ein sie umschließendes Gehäuse zwischen Endstück 30 und Mittelstück 14 angeordnet sind.

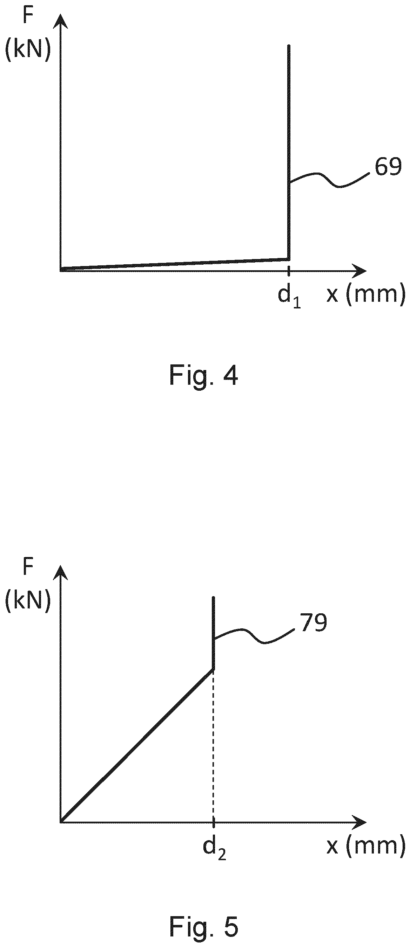

Die erste Baugruppe 60 umfasst ein elastisches Lagerelement 62, welches in dem gezeigten Ausführungsbeispiel als Elastomerelement, beispielsweise als Schichtfeder, ausgebildet ist. Das Elastomerelement 62 kann sich zwischen zwei Platten befinden, an deren einander zugewandten Seiten das Elastomerelement 62 umgebende Einsätze 64 angeordnet sind, die einen ersten mechanischen Anschlag 64 bilden. Die genannten Platten können Teil der Schichtfeder sein. Im entspannten, d.h. nicht gestauchten Zustand des Elastomerelements 62 (vgl. Fig. 2a-b: das Elastomerelement 62 ist nicht zusammengedrückt) definiert der axiale Abstand der ersten mechanischen Anschläge 64 eine erste Strecke d₁ (vgl. Fig. 2a). Um diese Strecke d₁ kann das Elastomerelement 62 maximal zusammengedrückt werden, bevor eine weitere Stauchung blockiert ist. Dadurch wird das Elastomerelement 62 vor Überlastung geschützt. Eine beispielhafte Steifigkeitskennlinie 69 der ersten Baugruppe 60 ist in der Figur 4 dargestellt.

Die zweite Baugruppe 70 umfasst einen Hydraulikzylinder mit einem Zylindergehäuse 73, in welchem ein Kolben 75 verschiebbar gelagert ist. Eine mit dem Kolben 75 verbundene Kolbenstange 74 ist einseitig in Richtung der ersten Baugruppe 60 aus dem Zylindergehäuse 73 hinausgeführt und kontaktiert einen Kontaktabschnitt 66 der ersten Baugruppe 60. Die Kolbenstange 74 kann einstückig mit dem Kolben 75 ausgebildet oder über Verbindungsmittel mit diesem verbunden sein und fungiert als Kontaktelement 74, über welches die zweite Baugruppe 70 mechanisch mit der ersten Baugruppe 60 in Verbindung steht. Bei einer stauchenden Kraft auf die Lageranordnung 50 wirkt eine Kraft sowohl auf den Hydraulikzylinder der zweiten Baugruppe 70 als auch auf das Elastomerelement 62 der ersten Baugruppe 60.

Der Hydraulikzylinder ist über Hydraulikleitungen 56 an einen Hydraulikkreis des Zweiwegefahrzeugs 10 angeschlossen. In der Hydraulikleitung 56, die mit der dem Kontaktelement 74 abgewandten Druckkammer 76 verbunden ist, befindet sich ein Sperrventil 52, welches die Hydraulikleitung 56 und somit die Druckkammer 76 in einer Sperrstellung sperrt oder in einer Entlastungsstellung öffnet. In der Sperrstellung kann der Kolben 75 nicht nach oben verschoben werden, da kein Hydraulikfluid aus der Druckkammer 76 entweichen kann. In der Entlastungsstellung kann sich der Kolben 75 im Zylindergehäuse 73 solange bewegen, bis er an der Rückwand des Zylindergehäuses 73 anstößt (dies entspricht dem Dämpfungsmodus). Letztere und der Kolben 75 bilden einen zweiten mechanischen Anschlag, welcher nach einer maximalen Strecke d₂ (= zweite Strecke) eine weitere Einfahrbewegung des Kontaktelements 74 blockiert. Eine beispielhafte (einheitenlose) Steifigkeitskennlinie 79 der zweiten Baugruppe 70 ist in der Figur 5 dargestellt.

Die Figur 2a zeigt die Situation, bei der sich das Kontaktelement 74 in der maximal ausgefahrenen Position befindet (die Lageranordnung 50 ist nicht belastet bzw. gestaucht), während die Figur 2b die Situation zeigt, in der das Kontaktelement 74 maximal eingefahren ist und der Kolben 75 nach Zurücklegen der zweiten Strecke d₂ an das Zylindergehäuse 73 anstößt. Da sich der Kolben 75 in der Sperrstellung des Sperrventils 52 wesentlich leichter verschieben lässt als das Elastomerelement 62 komprimiert werden kann, besitzt die zweite Baugruppe 70 eine geringere Steifigkeit als die erste Baugruppe 60 (vgl. Figuren 4 und 5). Die Steifigkeit der ersten Baugruppe 60 ist vorzugsweise so viel höher als die der zweiten Baugruppe 70, dass eine Kompression des Elastomerelements 62 erst nach vollständigem Einfahren des Kontaktelements 74 (vgl. Fig. 2b) erfolgt. Die Steifigkeitskennlinie der gesamten Lageranordnung 50 entspricht daher insbesondere einer Kombination der in Fig. 4 und 5 für die einzelnen Baugruppen 60, 70 gezeigten Steifigkeitskennlinien 69, 79.

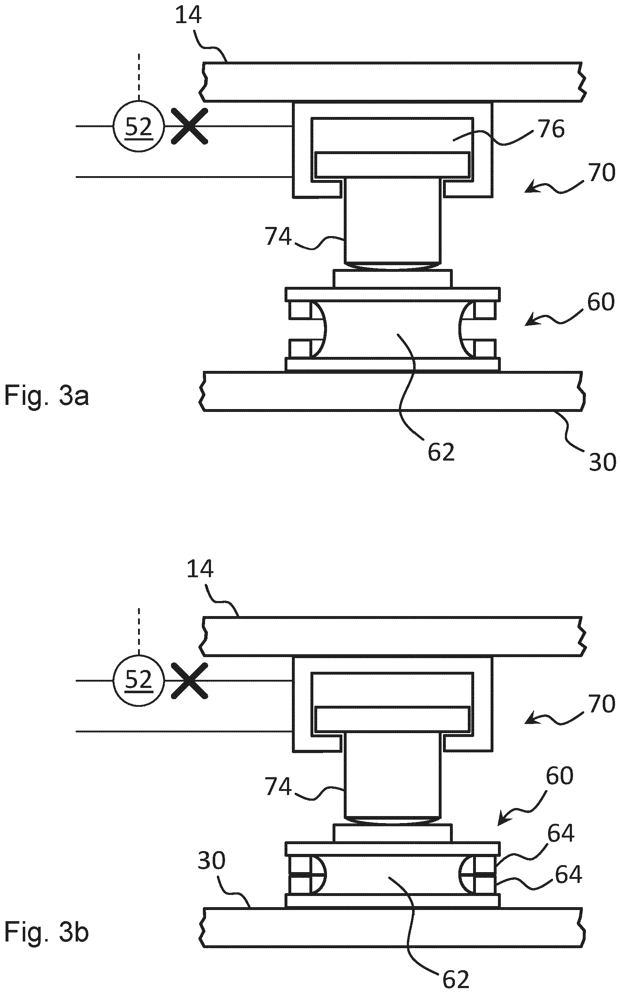

Die Figuren 3a-b zeigen die Situation bei über das Sperrventil 52 gesperrter Drucckammer 76. Die Lageranordnung 50 befindet sich hierbei im Sperrmodus (angedeutet durch ein "X" in der Hydraulikleitung 56). In der Figur 3a ist das Elastomerelement 62 entspannt. Wirkt nun eine Kraft auf die Lageranordnung 50, so kann sich der Kolben 75 im Zylindergehäuse 73 nicht bewegen. Somit wird die Steifigkeit der Lageranordnung 50 nun durch die Steifigkeit des Elastomerelements 62 bereitgestellt. Dieses kann maximal um die erste Strecke d₁ zusammengedrückt werden (vgl. Fig. 3b).

Die Lageranordnung 50 umfasst somit eine Reihenschaltung eines Hydraulikzylinders und eines Elastomerelements 62. Durch geeignete Wahl der Elastomerkennlinie lässt sich das Fahrverhalten des Zweiwegefahrzeugs 10 einstellen.

Die Verwendung dieser Lageranordnungen 50 ermöglicht es in einer bevorzugten Ausführung, dass sich im Sperrmodus das Schienenfahrwerk langfristig immer selbstständig in seiner Grundstellung (z.B. horizontale Ausrichtung des Mittelstücks 14) ausrichtet. Dies erfolgt bevorzugt über geeignete Verschiebungen der Kolben 75 der jeweiligen Lagerordnungen 50, sodass Schrägstellungen der Schienenachsen 20 bei einer Schienenverwindung ausgeglichen werden. Hierzu kann vorgesehen sein, dass die Sperrventile 52 in einer Situation, in der keine externe Last auf den zugehörigen Hydraulikzylinder wirkt und dadurch kein Druck in der Druckkammer 76 anliegt, kurzzeitig öffnen, damit Hydraulikfluid in die jeweilige Druckkammer 76 nachfließen kann. Vorzugsweise liegt in den Hydraulikleitungen 56 zu den Sperrventilen 52 immer ein gewisser Nachspeisedruck an. Die Sperrventile 52 können so ausgebildet sein, dass sie in der beschriebenen Situation automatisch aufgrund des anliegenden Nachspeiserucks öffnen. Dadurch erfolgt keine permanente "Speicherung" einer Verwindung über die Lageranordnungen 50, wenn diese am Ort einer Gleisverwindung vom Dämpfungsmodus in den Sperrmodus umgeschaltet werden.

Bei dem Ausführungsbeispiel der Figuren 2a-3b ist die erste Baugruppe am Endstück 30 und die zweite Baugruppe am Mittelstück 14 montiert. Der umgekehrte Fall ist selbstverständlich ebenfalls möglich.

Die Figur 6 zeigt eine Außenansicht auf die Lageranordnung 50 gemäß einem Ausführungsbeispiel. Es ist das Gehäuse 71 der zweiten Baugruppe zu erkennen. Eine Explosionsdarstellung der ersten Baugruppe 60 gemäß einem Ausführungsbeispiel ist in der Figur 7 gezeigt. Die Einsätze 64, die den ersten mechanischen Anschlag bilden, sind hierbei ober- und unterhalb des Elastomerelements 62 gezeigt, obwohl sich diese im montierten Zustand zwischen den das Elastomerelement 62 oben und unten begrenzenden Platten befinden und mit diesen verschraubt sein können. Ferner ist das Gehäuse 61 der ersten Baugruppe 60 zu erkennen, welche mit einer den hervorstehenden Kontaktabschnitt 66 aufweisenden Kappe verbunden, insbesondere verschraubt ist.

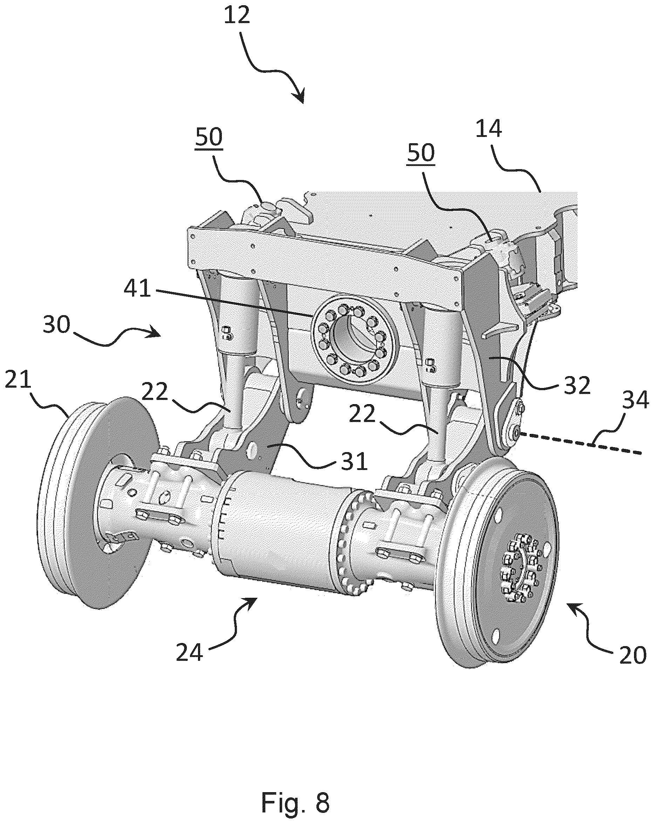

Die Figur 8 zeigt ein Ausführungsbeispiel des erfindungsgemäßen Zweiwegefahrzeugs 10, wobei hier eines der Endstücke 30 an der Stirnseite des Mittelstücks 14 näher dargestellt ist. Das Endstück 30 dieses Ausführungsbeispiels umfasst ein erstes Rahmenteil 31, an welchem die Schienenachse 20 gelagert ist, sowie ein über ein Drehlager 41 um die Pendelachse 40 drehbar mit dem Mittelstück 14 an dessen Stirnseite gekoppeltes zweites Rahmenteil 32. Die ersten und zweiten Rahmenteile 31, 32 sind in Bezug auf die Pendelachse 40 rotationsstarr miteinander verbunden, sodass eine Drehung eines zweiten Rahmenteils 32 um dessen Pendelachse 40 zu einer entsprechenden Pendelbewegung der zugeordneten Schienenachse 20 führt. Die ersten und zweiten Rahmenteile 31, 32 sind aber nicht starr, sondern um eine horizontale Schwenkachse 34 schwenkbar miteinander verbunden. Durch ein Verschwenken des ersten Rahmenteils 31 relativ zum zweiten Rahmenteile 32 wird die Schienenachse 20 in die verschiedenen Fahrstellungen bewegt. Zwischen den Rahmenteilen 31, 32 befinden sich Aktuatoren in Form von zwei hydraulischen Schwenkzylindern 22, die gelenkig mit den ersten und mit den zweiten Rahmenteilen 31, 32 gekoppelt sind. Die Schienenachse 20 wird durch Ein- und Ausfahren der Schwenkzylinder 22 um die horizontale Schwenkachse 34 geschwenkt.

Eine der Schienenachsen 20 kann einen Schienenachsenantriebsmechanismus 24 besitzen, um die Schienenachse 20 für die Schienenfahrt des Zweiwegefahrzeugs 10 aktiv anzutreiben (vgl. Fig. 8). Der Schienenachsenantriebsmechanismus 24 kann ein mechanisches Getriebe und/oder einen hydraulischen Antrieb umfassen.

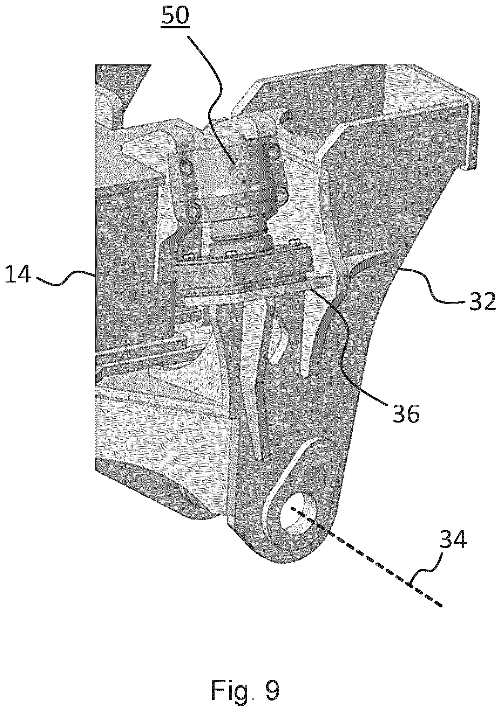

Bei dem Ausführungsbeispiel der Figur 8 sind die Lageranordnungen 50 im Bereich der Lagerungen der Schwenkzylinder 22 am zweiten Rahmenteil 32 zwischen letzterem und dem Mittelstück 14 angeordnet. Die Figur 9 zeigt einen vergrößerten Ausschnitt einer Lageranordnung 50 in besagter Einbauposition. Es ist zu erkennen, dass das zweite Rahmenteil 32 einen Befestigungsabschnitt 36 aufweisen kann, an welchem die erste Baugruppe 60 montiert ist. Die zweite Baugruppe 70 bzw. deren Gehäuse 71 ist am Mittelstück 14 befestigt.

Das Zweiwegefahrzeug 10 besitzt vorzugsweise drei unterschiedliche Fahrstellungen. In einer ersten Fahrstellung für die Straßenfahrt sind die Schienenachsen 20 angehoben und der Unterwagen 12 sitzt nur über die Räder 16 der Radachsen auf dem Boden auf und kann über diese verfahren werden (z.B. auf einer öffentlichen Straße oder auf unebenem Gelände). In einer zweiten Fahrstellung für die Schienenfahrt sind die Schienenachsen 20 über die Aktuatoren 22 so weit abgesenkt, dass die Räder 16 der Radachsen auf den Schienen 1 aufsitzen und gleichzeitig die Schienenräder 21 der Schienenachsen auf den Schienen 1 aufsitzen, sodass das Zweiwegefahrzeug 10 über die Radachsen angetrieben und über die Schienenachsen 20 auf den Schienen 1 geführt wird. In einer dritten Fahrstellung für die Schienenfahrt sind die Schienenachsen über den Betätigungsmechanismus weiter abgesenkt, sodass das Zweiwegefahrzeug 10 nur noch über die Schienenräder 21 auf den Schienen 1 aufsitzt und die Räder 16 der Radachsen in der Luft hängen. Der Antrieb erfolgt dann über den genannten Schienenachsenantriebsmechanismus 24 einer oder mehrerer Schienenachsen 20.

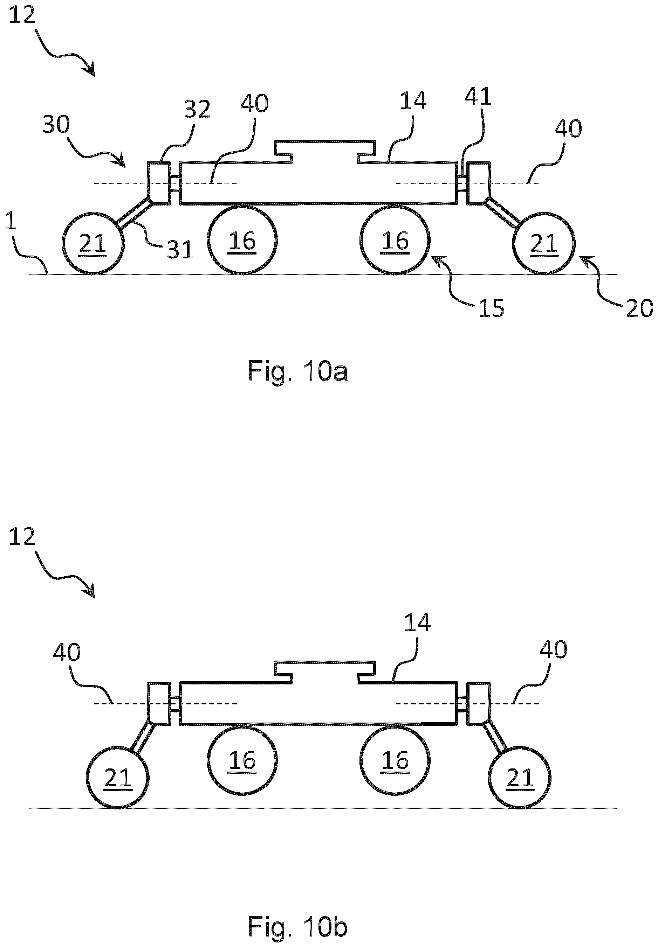

Die Figuren 10a-b zeigen schematisch den Unterwagen 12 eines Ausführungsbeispiels des erfindungsgemäßen Zweiwegefahrzeugs 10 in einer Seitenansicht. Hierbei sind nun die Räder 16 der Radachsen 15 eingezeichnet, von denen mindestens eine Radachse 15 über einen nicht dargestellten Antriebsstrang des Mittelstücks 14 antreibbar ist. Ferner sind die Schienenräder 21 der Schienenachsen 20 zu erkennen. Die Figur 10a zeigt die zweite Fahrstellung, bei der sowohl die Räder 16 als auch die Schienenräder 21 auf den Schienen 1 aufliegen. Die ersten Rahmenteile 31 sind hierfür in eine entsprechende Position nach unten geschwenkt. Die Figur 10b zeigt die dritte Fahrstellung, bei der die ersten Rahmenteile 31 weiter abgesenkt worden sind, sodass die Räder 16 keinen Kontakt zu den Schienen 1 besitzen und der Unterwagen 12 nur über die Schienenräder 21 aufsitzt. Es ist zu erkennen, dass durch die Anordnung der Drehlager 41 zwischen den zweiten Rahmenteilen 32 und dem Mittelstück 14 die Pendelachsen 40 in beiden Fahrstellungen parallel zueinander (d.h. bei horizontal verlaufenden Schienen horizontal) ausgerichtet sind. Dadurch kommt es in keiner der Fahrstellungen bei ausgleichenden Pendelbewegungen zu nennenswerten ungewollten Lenkbewegungen der Schienenachsen 20 um vertikale Hochachsen. Dass das erste Drehlager 41 jeweils zwischen dem zweiten Rahmenteil 32 und dem Mittelstück 14 angeordnet ist, ist insbesondere eine funktionale Definition. Das erste Drehlager 41 kann tatsächlich zwischen dem zweiten Rahmenteil 32 und dem Mittelstück 14 angeordnet sein, kann aber auch beispielsweise im zweiten Rahmenteil 32 verbaut sein (siehe Fig. 8). Umgekehrt wäre eine Anordnung im Mittelstück 14 denkbar.

Die Funktion der Lageranordnung 50 lässt sich folgendermaßen zusammenfassen:
Im weichen Fahrwerksmodus (Dämpfungsmodus - niedrigere Steifigkeit) ist das Sperrventil 52 geöffnet. Eine vorliegende Schienenunebenheit oder -verwindung bewirkt eine Positionsänderung des Schienenfahrwerks (der Abstand zwischen zweitem Rahmenteil 32 und Mittelstück 14 im Bereich einer Lageranordnung 50 wird kleiner), wodurch eine Kraft auf das Elastomerelement 62 der ersten Baugruppe 60 und den Hydraulikzylinder der zweiten Baugruppe 70 wirkt. Da die Druckkammer (Kolbenraum) des Hydraulikzylinders geöffnet ist und Hydraulikfluid über das Sperrventil 52 abfließen kann, kann das Kontaktelement 74 einfahren und das Elastomerelement 62 wird nicht gestaucht (vgl. Fig. 2a-b)

Im harten Fahrwerksmodus (Sperrmodus - höhere Steifigkeit) ist das Sperrventil 52 geschlossen. Eine vorliegende Schienenunebenheit oder -verwindung bewirkt eine Positionsänderung des Schienenfahrwerks (der Abstand zwischen zweitem Rahmenteil 32 und Mittelstück 14 im Bereich einer Lageranordnung 50 wird kleiner), wodurch eine Kraft auf das Elastomerelement 62 der ersten Baugruppe 60 und den Hydraulikzylinder der zweiten Baugruppe 70 wirkt. Da die Druckkammer (Kolbenraum) des Hydraulikzylinders geschlossen ist und das Hydraulikfluid nicht abfließen kann, kann das Kontaktelement 74 nicht einfahren und das Elastomerelement 62 wird gestaucht (vgl. Fig. 3a-b). Hierbei ist die Steifigkeit des Gesamtsystems deutlich höher im Vergleich zum Dämpfungsmodus.

Eine alternative Lageranordnung kann vorsehen, dass nur eines der beiden Endstücke 30 über erfindungsgemäße Lageranordnungen 50 gelagert ist, während das gegenüberliegende Endstück über simplere Lagervorrichtungen 80 mit dem Mittelstück 14 gekoppelt ist.

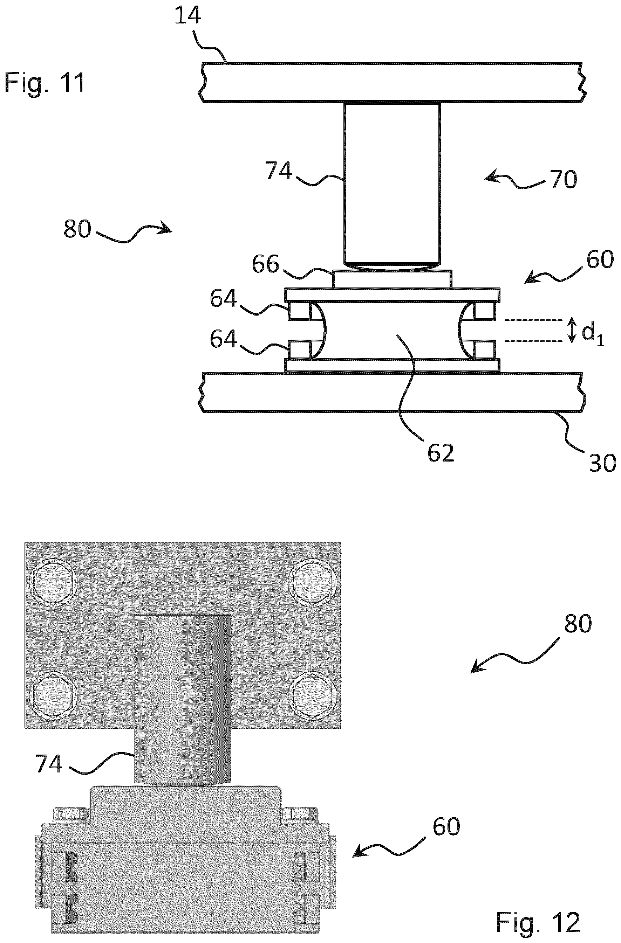

Ein Ausführungsbeispiel einer solchen simpleren Lagervorrichtung 80 ist in der Figur 11 schematisch dargestellt. Hierbei umfasst die zweite Baugruppe 70 keinen Hydraulikzylinder, sondern das Kontaktelement 74 ist eine starre Stange. Somit stellt die Lagervorrichtung 80 nur eine einzige Steifigkeit bereit, welche nicht schaltend verändert werden kann - nämlich die Steifigkeit des Elastomerelements 62 der ersten Baugruppe 60. Abgesehen davon kann der Aufbau, insbesondere derjenige der ersten Baugruppe 60, identisch zum zuvor beschriebenen Ausführungsbeispiel sein. Die Figur 12 zeigt eine äußere Seitenansicht eines Ausführungsbeispiels der Lagervorrichtung 80.

### Bezugszeichenliste:

- 1: Schiene
- 2: Verwindung
- 10: Zweiwegefahrzeug
- 12: Unterwagen
- 14: Mittelstück
- 15: Radachse
- 16: Rad
- 20: Schienenachse
- 21: Schienenrad
- 22: Aktuator
- 24: Schienenachsenantriebsmechanismus
- 30: Endstück
- 31: Erstes Rahmenteil
- 32: Zweites Rahmenteil
- 34: Schwenkachse
- 36: Befestigungsabschnitt
- 40: Pendelachse
- 41: Drehlager
- 50: Lageranordnung
- 51: Gehäuse
- 52: Sperrventil
- 54: Steuerleitung
- 56: Hydraulikleitung
- 60: Erste Baugruppe
- 61: Gehäuse
- 62: Elastisches Lagerelement
- 64: Erster mechanischer Anschlag
- 66: Kontaktabschnitt
- 69: Steifigkeitskennlinie erste Baugruppe
- 70: Zweite Baugruppe
- 71: Gehäuse
- 72: Hydraulikzylinder
- 73: Zylindergehäuse
- 74: Kontaktelement (Kolbenstange)
- 75: Kolben
- 76: Druckkammer
- 79: Steifigkeitskennlinie zweite Baugruppe
- 80: Lagervorrichtung
- d₁: Erste Strecke
- d₂: Zweite Strecke

## Patentansprüche

1. Zweiwegefahrzeug (10), insbesondere Zweiwegebagger, mit einem Unterwagen (12), welcher ein erstes Fahrwerk für die bodengebundene Fortbewegung des Zweiwegefahrzeugs sowie ein Schienenfahrwerk mit einer vorderen und einer hinteren Schienenachse (20) für die Schienenfahrt umfasst, wobei der Unterwagen (12) ein Mittelstück (14) umfasst, an welchem das erste Fahrwerk angeordnet ist, wobei das Schienenfahrwerk Aktuatoren (22) umfasst, mittels welchen die Schienenachsen (20) relativ zum Mittelstück (14) zwischen einer ersten Fahrstellung für die Straßenfahrt und wenigstens einer zweiten Fahrstellung für die Schienenfahrt bewegbar sind,
**dadurch gekennzeichnet,**
**dass** die vordere und/oder die hintere Schienenachse (20) um eine Pendelachse (40) drehbar gegenüber dem Mittelstück (14) gelagert und mit dem Mittelstück (14) zusätzlich über wenigstens eine Lageranordnung (50) gekoppelt ist, welche zwischen einem Dämpfungsmodus mit vergleichsweise niedriger Steifigkeit und einem Sperrmodus mit vergleichsweise höherer Steifigkeit umschaltbar ist, wobei die Lageranordnung (50) zwei getrennte Baugruppen (60, 70) umfasst, von denen eine erste Baugruppe (60) die höhere Steifigkeit und eine zweite Baugruppe (70) die niedrigere Steifigkeit bereitstellt, wobei die zweite Baugruppe (70) zum Umschalten in den Sperrmodus deaktivierbar ist.

2. Zweiwegefahrzeug (10) nach Anspruch 1, wobei die erste Baugruppe (60) ein elastisches Lagerelement (62), insbesondere ein Elastomerelement, umfasst.

3. Zweiwegefahrzeug (10) nach Anspruch 2, wobei die erste Baugruppe (60) einen ersten mechanischen Anschlag (64) umfasst, welcher eine Kompression des elastischen Lagerelements (62) um eine erste Strecke (d₁) zulässt.

4. Zweiwegefahrzeug (10) nach einem der vorhergehenden Ansprüche, wobei die zweite Baugruppe (70) ein durch die erste Baugruppe (60) kontaktierbares, verschiebbar gelagertes Kontaktelement (74) umfasst, welches einen zweiten mechanischen Anschlag aufweist, der eine Verschiebung des Kontaktelements (74) um eine zweite Strecke (d₂) zulässt.

5. Zweiwegefahrzeug (10) nach Anspruch 4, wobei das Kontaktelement (74) zum Umschalten in den Sperrmodus verriegelbar und zum Umschalten in den Dämpfungsmodus entriegelbar ist, wobei eine Verschiebung des Kontaktelements (74) im Sperrmodus blockiert ist und im Dämpfungsmodus mit der niedrigeren Steifigkeit erfolgt.

6. Zweiwegefahrzeug (10) nach Anspruch 4 oder 5, wobei die zweite Baugruppe (70) einen Hydraulikzylinder (72) mit einem in einem Zylindergehäuse (73) verschiebbar gelagerten Kolben (75) umfasst, wobei der Kolben (75) das Kontaktelement (74) darstellt oder mit diesem verbunden ist, wobei die zweite Baugruppe (70) vorzugsweise ein Sperrventil (52) umfasst, welches in einer Sperrstellung eine die zweite Strecke (d₂) definierende Druckkammer (76) des Hydraulikzylinders (72) hydraulisch absperrt.

7. Zweiwegefahrzeug (10) nach einem der vorhergehenden Ansprüche, wobei die Baugruppen (60, 70) der Lagerkomponente (50) unabhängig voneinander austauschbar sind und/oder jeweils ein eigenes Gehäuse (51) besitzen.

8. Zweiwegefahrzeug (10) nach einem der vorhergehenden Ansprüche, wobei das Schienenfahrwerk wenigstens ein Endstück (30) umfasst, welches eine der Schienenachsen (20) trägt und um eine parallel zu einer Längsachse des Unterwagens verlaufende Pendelachse (40) drehbar am Mittelstück (14) gelagert ist, um Unebenheiten bei der Schienenfahrt durch eine Pendelbewegung der Schienenachse (20) auszugleichen, wobei das Endstück (30) über mindestens eine Lageranordnung (50), vorzugsweise über zwei Lageranordnungen (50), mit dem Mittelstück (14) gekoppelt ist.

9. Zweiwegefahrzeug (10) nach Anspruch 8, wobei das Endstück (30) ein erstes und ein zweites Rahmenteil (31, 32) umfasst, wobei die Schienenachse (20) am ersten Rahmenteil (31) gelagert ist und das zweite Rahmenteil (32) um die Pendelachse (40) drehbar mit dem Mittelstück (14) verbunden ist, wobei die Rahmenteile (31, 32) beweglich, insbesondere schwenkbar, miteinander verbunden sind, wobei vorzugsweise die erste Baugruppe (60) mit dem zweiten Rahmenteil (32) und die zweite Baugruppe (70) mit dem Mittelstück (14) verbunden ist oder umgekehrt.

10. Zweiwegefahrzeug (10) nach Anspruch 8 oder 9, wobei das Schienenfahrwerk ein vorderes und ein hinteres Endstück (30) umfasst, welche jeweils an einer in Fahrtrichtung gesehen vorderen und hinteren Stirnseite des Mittelstücks (14) angeordnet und drehbar mit dem Mittelstück (14) verbunden sind, wobei die Pendelachsen (40) der Endstücke (30) vorzugsweise unabhängig von der Fahrstellung parallel, insbesondere koaxial zueinander verlaufen.

11. Zweiwegefahrzeug (10) nach Anspruch 10, wobei die Endstücke (30) jeweils über mindestens eine Lageranordnung (30), vorzugsweise jeweils über zwei Lageranordnungen (50), mit dem Mittelstück (14) gekoppelt sind, wobei die Lageranordnungen (50) vorzugsweise eine zu einer Mittelebene des Unterwagens (12) symmetrische Anordnung bilden.

12. Zweiwegefahrzeug (10) nach Anspruch 10, wobei eines der Endstücke (30) über mindestens eine Lageranordnung (50), vorzugsweise über zwei Lageranordnungen (50), mit dem Mittelstück (14) gekoppelt ist und das andere Endstück (30) über mindestens eine zur Lageranordnung (50) unterschiedlich ausgebildete Lagervorrichtung (80), vorzugsweise über zwei Lagervorrichtungen (80), mit dem Mittelstück (14) gekoppelt ist, welche insbesondere nur eine einzige Steifigkeit bereitstellt.

13. Zweiwegefahrzeug (10) nach einem der Ansprüche 8 bis 12, wobei das mindestens eine Endstück (30) über ein erstes Drehlager und ein entlang der Pendelachse (40) vom ersten Drehlager beabstandetes zweites Drehlager am Mittelstück (14) gelagert ist, wobei vorzugsweise das erste Fahrwerk ein Radfahrwerk mit mindestens zwei Radachsen für die Straßenfahrt ist, wobei wenigstens eine der Radachsen um eine koaxial zur Pendelachse (40) verlaufende Radfahrwerkpendelachse schwenkbar gelagert ist, und das zweite Drehlager auf einem die Radfahrwerkpendelachse definierenden Pendelbolzen oder auf einem separaten, koaxial dazu gelagerten Bolzen gelagert ist.

14. Zweiwegefahrzeug (10) nach einem der vorhergehenden Ansprüche, wobei zumindest eine der Schienenachsen (20) einen Schienenachsenantriebsmechanismus (24) umfasst und über diesen in einem Fahrmodus zum Verfahren des Zweiwegefahrzeugs (10) auf Schienen (1) antreibbar ist, wobei der Schienenachsenantriebsmechanismus (24) insbesondere zusammen mit der Schienenachse (20) um die Pendelachse (40) relativ zum Mittelstück (14) drehbar und über die Aktuatoren (22) relativ zum Mittelstück (14) in die verschiedenen Fahrstellungen bewegbar ist.

15. Lageranordnung (50) für ein Zweiwegefahrzeug (10) nach einem der vorhergehenden Ansprüche.
